(19) Europäisches Patentamt
European Patent Office
Office européen des brevets

(11) **EP 4 230 095 A1**

(12) **EUROPEAN PATENT APPLICATION**

(43) Date of publication:
**23.08.2023 Bulletin 2023/34**

(21) Application number: **22157045.0**

(22) Date of filing: **16.02.2022**

(51) International Patent Classification (IPC):
**A47J 19/02** (2006.01)

(52) Cooperative Patent Classification (CPC):
**A47J 19/027**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Versuni Holding B.V.**
**5656 AE Eindhoven (NL)**

(72) Inventor: **HOLZBAUER, Juergen**
**5656 AE Eindhoven (NL)**

(74) Representative: **Vollering, Stefanus Franciscus Maria**
**Philips Domestic Appliances IP Department**
**High Tech Campus 42**
**5656 AE Eindhoven (NL)**

(54) **KITCHEN FOOD PROCESSING CONTAINER AND APPARATUS COMPRISING THE SAME**

(57) Provided is a kitchen food processing container (100) for separating juice from pulp. The container comprises a base (102) couplable to a motor to enable spinning of the container about a rotation axis (104). The container includes a pulp retention wall (106) supported on the base. The rotation axis may extend vertically when the base is coupled to the motor and orientated for use. The pulp retention wall has an inner surface (108) facing a chamber (110), and an outer surface (112) facing away from the chamber. The pulp retention wall comprises a filter (114) configured to retain the pulp in the chamber whilst allowing the juice to pass out of the chamber. The container further comprises a juice retention wall (118) having a juice retention surface (116) whose circumference surrounds and faces the outer surface. The juice retention surface is provided in an annular recess of the juice retention wall such that the juice received on the juice retention surface is retained thereon during the spinning of the container. The juice retention surface is configured to enable movement of the juice retained thereon around its circumference. Thus, the juice can move to compensate for any imbalance of the spinning container caused by uneven pulp distribution around a circumference of the pulp retention wall. Further provided is a kitchen food processing apparatus comprising the container and a motor configured to enable spinning of the container about the rotation axis.

FIG. 1

## Description

FIELD OF THE INVENTION

The invention relates to a kitchen food processing apparatus having a centrifugal separator for separating juice from pulp. The invention relates, in particular, to the spinnable container of such a kitchen food processing apparatus.

BACKGROUND OF THE INVENTION

Extraction of juice from a blend needs mechanical force. Various designs of a centrifugal separator included in a kitchen food processing apparatus are known. Such a centrifugal separator may often be used in a centrifugal juicer.

Conventional centrifugal juicers comprise a housing in which a spinnable juicer container is mounted. The juicer container itself houses a food shredding element, for example a shredding disk, and the sidewall of the juicer container includes, or is defined by, a filter. A motor is couplable to the cutting element and the juicer container so that both elements can rotate together or separately. Gearing may be added so that they can rotate at different speeds.

The user starts the juicer and pushes food, for example a piece of fruit, into the juicer container where the food is shredded into pieces by the cutting element and juice is released. The spinning motion of the juicer container pushes the shredded food blend towards the sidewall of the juicer container. The filter has small holes which allow the juice to flow out of the juicer container but prevent the rest of the pulp from passing through. Thus, a clear juice can be obtained while pulp is collected in the juicer container.

It has been observed that the pulp is not always evenly distributed around the sidewall of the juicer container. Such uneven distribution of pulp can cause uneven weight distribution across the juicer container which leads to an increase in noise and vibration of the juicer while the juicer container is spinning.

Some conventional juicers address this imbalance by adding complex mechanical means, for example suspension systems, counter masses and/or damping systems, or via electronic means, for example g-force measurement and/or auto-stop and restart. Such complex mechanical or electronic means may increase the complexity and cost of manufacturing and may result in a decreased lifespan of the device.

Thus, there is a need for a solution to the imbalance caused by the unevenly distributed pulp without the use of complex mechanical or electronic means.

SUMMARY OF THE INVENTION

The invention is defined by the claims.

According to examples in accordance with an aspect of the invention, there is provided a kitchen food processing container for separating juice from pulp, the container comprising: a base couplable to a motor to enable spinning of the container about a rotation axis; a pulp retention wall arranged on the base, the pulp retention wall having an inner surface facing a chamber, and an outer surface facing away from the chamber, the pulp retention wall comprising a filter configured to retain the pulp in the chamber whilst allowing the juice to pass out of the chamber; and a juice retention wall having a juice retention surface whose circumference surrounds and faces the outer surface, wherein the juice retention surface is provided in an annular recess of the juice retention wall such that the juice received on the juice retention surface is retained thereon during the spinning, and wherein the juice retention surface is configured to enable movement of the juice retained thereon around the circumference.

The present invention is based on the realization that imbalance caused by unevenly distributed pulp around the pulp retention wall of the container can be alleviated in a relatively simple and inexpensive way by providing the juice retention surface surrounding and facing the outer surface of the pulp retention wall. Since the juice retention surface enables movement of the juice retained thereon around its circumference during spinning of the container, the juice can move to counteract the imbalance caused by the unevenly distributed pulp.

This solution contrasts to prior art kitchen food processing containers in which the spinning surface surrounding and facing the outer surface of a pulp retention wall is configured to cause juice received thereon to, rather than being retained thereon, rise or descend on the surface and exit via an outlet during spinning of the container.

In some embodiments, a continuous surface smoothly extends around the circumference of, and is thereby included in, the juice retention surface.

For example, such a continuous surface extends around the entirety of the circumference, and thereby defines, the juice retention surface.

In alternative embodiments, a plurality of surface segments are provided around the circumference, and are thereby included in or define, the juice retention surface.

In such embodiments, the juice may move around the circumference in spite of discontinuities between the surface segments.

In some embodiments, the juice retention surface is smooth and/or no barriers protrude therefrom to inhibit the movement of the juice around the circumference of the juice retention surface.

The resulting uninhibited movement of the juice around the circumference may assist to counteract the imbalance caused by the unevenly distributed pulp.

In at least some embodiments, the circumference of the juice retention surface is centered by the rotation axis.

This may assist in balancing the container during spinning of the container.

Alternatively or additionally, the circumference of the chamber defined by the inner surface of the pulp retention wall may be centered by the rotation axis.

This may also assist in balancing the container during spinning of the container.

It is noted that the term "centered by the rotation axis" may mean that a center of symmetry of the circumference (being referred to) is defined and through which center of symmetry the rotation axis passes.

In some embodiments, at least part of the juice retention surface extends parallel with the rotation axis. This may assist to retain the juice on the juice retention surface during the spinning of the container.

In some embodiments, the juice retention surface comprises, or is defined by, a right cylindrical surface axially extending parallel with the rotation axis.

Such a right cylindrical surface being included in or defining the juice retention surface may assist retention of the juice on the juice retention surface during the spinning of the container.

Alternatively or additionally, the juice retention surface may comprise an inboard portion and an outboard recessed portion set further back, in other words offset so as to be further, from the rotation axis than the inboard portion such as to collect at least some of the juice therein during the spinning of the container.

Such an outboard recessed portion may assist to retain the juice on the juice retention surface during the spinning of the container.

The outboard recessed portion may, for instance, take the form of an annular channel extending around the circumference of the juice retention surface. Thus, the outboard recessed portion may assist to increase the juice-retaining capacity of the juice retention surface.

In some embodiments, a volume of juice retainable on the juice retention surface during the spinning is at least 100 mL.

In other words, the capacity of the annular recess in the pulp retention wall may be at least 100 mL.

Such a volume may, as well as assisting to balance the spinning container, correspond to at least one serving of juice.

More generally, the juice retention surface may be arranged to retain a volume of juice whose weight is at least equal to, and preferably greater than, the weight of the pulp retainable in the filter of the pulp retention wall.

In some embodiments, the pulp retention surface permits retention of substantially all the juice retained thereon during the spinning of the container.

In some embodiments, the juice retention surface is separated from the outer surface by at least 1 mm. By ensuring that the gap between the juice retention surface and the outer surface is at least 1 mm, movement of the juice around the circumference of the juice retention surface may be facilitated.

In some embodiments, the juice retention surface is separated from the outer surface by 5 to 10 mm.

Such a spacing may assist to provide sufficient capacity of the juice retention surface, for example for at least one portion of juice, for instance 100 mL.

The juice retention wall may have a top portion distal from the base and a bottom portion proximal to the base, with the juice retention surface defining a surface of the juice retention wall extending between the top portion and the bottom portion.

In some embodiments, the above-described outboard recessed portion may be arranged proximal to the bottom portion, and hence distal from the top portion, of the juice retention wall. This may assist in lowering the center of gravity of the container during the spinning, and thus improve stability.

In some embodiments, the top portion comprises an upper juice retention element arranged to protrude radially towards the center of the container. The upper juice retention element may assist to minimize or prevent escape of juice via the top portion of the juice retention wall.

In some embodiments, the upper juice retention element extends to reach the pulp retention wall. Thus, the upper juice retention element may prevent escape of juice between the top portion of the juice retention wall and the pulp retention wall.

The bottom portion may comprise a lower juice retention element arranged to protrude radially towards the center of the container. The lower juice retention element may assist to minimize or prevent escape of juice via the bottom portion of the juice retention wall during the spinning of the container.

The annular recess in which the juice retention surface is provided may, in some embodiments, be defined between the upper juice retention element and the lower juicer retention element.

In embodiments in which the juice retention surface includes the recessed outboard portion and the recessed outboard portion is arranged proximal to the bottom portion, the lower juice retention element may define a lower periphery of the recessed outboard portion.

Thus, the lower juice retention element may assist to retain the juice in the recessed outboard portion during the spinning of the container.

An opening may be provided in the container for allowing the juice to flow out of the container, for example by gravity, when the rotation of the container has been sufficiently slowed down following the spinning, for example to less than or equal to a threshold rotational speed in the range of 5 to 20 revolutions per minute.

Such an opening may, in embodiments in which the juice retention wall comprises the lower juice retention element, be defined between the lower juice retention element and the pulp retention wall. This opening may provide a convenient outlet through which the juice can flow by gravity when the rotation of the container has been sufficiently slowed down following the spinning.

In some embodiments, the juice retention wall is detachably coupled to the pulp retention wall and/or to the base. Detachment of the juice retention wall may facilitate cleaning of the container.

The filter may comprise a sieve; an edge type filter; and/or a plurality of holes of at most 2 mm in any one direction. Such a filter may assist to retain the pulp in the chamber, whilst facilitating outflow of the juice towards the juice retention surface during the spinning of the container.

The filter may be provided around at least a portion of, for example may be provided in a plurality of portions distributed around, a circumference of the pulp retention wall.

Preferably, the filter is provided around the entirety of the circumference of the pulp retention wall. The latter may facilitate balancing of the container during the spinning of the container.

In alternative embodiments in which the filter is provided around only a portion, or fraction, of the circumference of the pulp retention wall, the above-described movement of the juice around the circumference of the juice retention surface may assist to compensate for more pulp being present at the portion of the circumference of the pulp retention wall at which the filter is provided.

In some embodiments, the filter comprises, or is, a perforate wall displaced from the circumferential plane and extending in a direction having components in a radial direction, as disclosed, for example, in WO2020002119A1.

In some embodiments, the juice retention surface is configured to release a volume of juice retained thereon when the rotational speed of the container has slowed, following said spinning, to or beyond a threshold rotational speed, for example a threshold rotational speed in the range of 5 to 20 revolutions per minute.

At or below the threshold, e.g. predetermined, rotational speed, the volume of juice may be released, for example by gravity, from the juice retention surface.

In some embodiments, the pulp retention wall comprises an inner pulp retention wall portion comprising the inner surface, and an outer pulp retention wall portion comprising the outer surface, with a cavity provided between the first and second pulp retention wall portions.

In such embodiments, the filter may be included in the inner pulp retention wall portion and arranged to permit juice to pass into the cavity, with the outer pulp retention wall portion being arranged, for example by having a sloped surface, such that the juice received in the cavity is guided, for example upwards or downwards, to a pulp retention wall outlet through which the juice can flow to reach the juice retention surface.

According to another aspect there is provided a kitchen food processing apparatus comprising: the kitchen food processing container according to any of the embodiments described herein; and an apparatus base, the base of the container being supported on the apparatus base, wherein the apparatus base comprises a motor for coupling to the base of the container so as to enable spinning of the container about a rotation axis; and an outlet for juice to exit to the exterior of the apparatus, wherein a fluid path is defined from between the outer surface and the juice retention surface to the outlet.

In some embodiments, the motor is configured to spin the container at a rotational speed of at least 800 revolutions per minute.

This may assist retention of the juice on the juice retention surface.

The motor may, for example, spin the container at a rotational speed in the range of 800 revolutions per minute to 4000 revolutions per minute.

In some embodiments, the apparatus comprises a controller configured to control the motor to spin the container so as to cause juice received on the juice retention surface to be retained thereon, and to subsequently control the motor to slow the rotational speed of the container to or beyond a threshold rotational speed to cause release of the juice from the juice retention surface.

At such a threshold, e.g. predetermined, rotational speed, the volume of juice may be released by gravity from the juice retention surface, as previously described.

The threshold rotational speed may, for example, be in the range of 5 to 20 revolutions per minute.

In some embodiments, the kitchen food processing apparatus comprises a blender unit configured to blend food into a food blend comprising the pulp and juice.

The food processing apparatus can, for example, be a blender, wherein the container is in the form of a blender jar of the blender.

In such an example, the filter is built into the blender jar, and rotating the blender jar after blending allows juice to pass through the filter.

In such an example, the additional attached spinnable juice retention wall may assist with balancing the spinning blender jar, as previously described.

The kitchen food processing apparatus may include a food shredding element disposed/disposable within the container, with the food shredding element being configured to blend food into a food blend.

In some embodiments, the food shredding element is rotatable by the motor independently of the spinning of the container.

In some embodiments, the motor is configured to rotate the food shredding element, independently of the spinning of the container, in the range of 8000 revolutions per minute to 20000 revolutions per minute.

According to a further aspect there is provided a method of separating juice from pulp using a kitchen food processing container having a base; a pulp retention wall arranged on the base, the pulp retention wall including an inner surface facing a chamber, and an outer surface facing away from the chamber, and a filter; and a juice retention surface whose circumference surrounds and faces the outer surface, the method comprising: spinning the container on the base to cause the juice to pass out of the chamber via the filter whilst retaining the pulp in the chamber, the juice being received and retained on the juice retention surface during the spinning, wherein the juice retention surface is configured to enable movement of the juice retained thereon around the circumference.

In some embodiments, the container is spun at a rotational speed of at least 800 revolutions per minute.

This may assist to retain juice on the juice retention surface.

The method may further comprise slowing rotation of the container following the spinning of the container to cause the juice to flow away from the juice retention surface.

In some embodiments, the slowing comprises slowing the rotational speed of the container to or beyond a threshold rotational speed, for example a predetermined threshold rotational speed, to cause release of the juice, e.g. the abovementioned volume of juice, from the juice retention surface.

The threshold rotational speed may, for example, be in the range of 5 to 20 revolutions per minute.

More generally, embodiments described herein in relation to the kitchen food processing container and the kitchen food processing apparatus may be applicable to the method, and embodiments described herein in relation to the method may be applicable to the kitchen food processing container and the kitchen food processing apparatus.

BRIEF DESCRIPTION OF THE DRAWINGS

For a better understanding of the invention, and to show more clearly how it may be carried into effect, reference will now be made, by way of example only, to the accompanying drawings, in which:

FIG. 1 provides a schematic cross-sectional view of a kitchen food processing container according to an example;
FIG. 2 provides a schematic cross-sectional view of a kitchen food processing apparatus comprising the kitchen food processing container shown in FIG. 1;
FIG. 3A provides a schematic cross-sectional view of a kitchen food processing container according to another example;
FIG. 3B provides a schematic cross-sectional view of a kitchen food processing container according to yet another example;
FIG. 4 provides a schematic cross-sectional view showing some of the architecture of a kitchen food processing apparatus according to another example; and
FIG. 5 provides a flowchart of a method of separating juice from pulp.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a kitchen food processing container for separating juice from pulp. The container comprises a base couplable to a motor to enable spinning of the container about a rotation axis. The container includes a pulp retention wall supported on the base. The rotation axis may extend vertically when the base is coupled to the motor and orientated for use. The pulp retention wall has an inner surface facing a chamber, and an outer surface facing away from the chamber. The pulp retention wall comprises a filter configured to retain the pulp in the chamber whilst allowing the juice to pass out of the chamber. The container further comprises a juice retention wall having a juice retention surface whose circumference surrounds and faces the outer surface. The juice retention surface is provided in an annular recess of the juice retention wall such that the juice received on the juice retention surface is retained thereon during the spinning of the container. The juice retention surface is configured to enable movement of the juice retained thereon around its circumference. Thus, the juice can move to compensate for any imbalance of the spinning container caused by uneven pulp distribution around a circumference of the pulp retention wall. Further provided is a kitchen food processing apparatus comprising the container and a motor configured to enable spinning of the container about the rotation axis.

It has been observed that the pulp that is left behind on and/or in the filter of the kitchen food processing container may be distributed across the filter, and hence across the pulp retention wall, in an uneven manner. Such an uneven pulp distribution may be due to several factors, such as uneven shredding of the food and/or uneven feeding of the resulting food particles to the filter. This uneven deposition of pulp results in weight imbalance within the filter, with one portion of the filter becoming heavier than another. This uneven weight distribution may cause a high degree of imbalance in the fast-rotating, in other words spinning, container. Further, this imbalance may result in noise and produce vibrations in the entire kitchen food processing apparatus creating an unpleasant user experience and resulting in excessive wear and damage to the components of the food processing apparatus. Moreover, components of the food processing apparatus, such as the housing, drum, shaft, shaft couplings, bushings and the bearings, may be affected. In a worst case scenario, the user might be forced to turn off the food processing apparatus to manually address the problem. Not only is this problem present in common centrifugal juicers but in any food processing apparatus with a centrifugal separator.

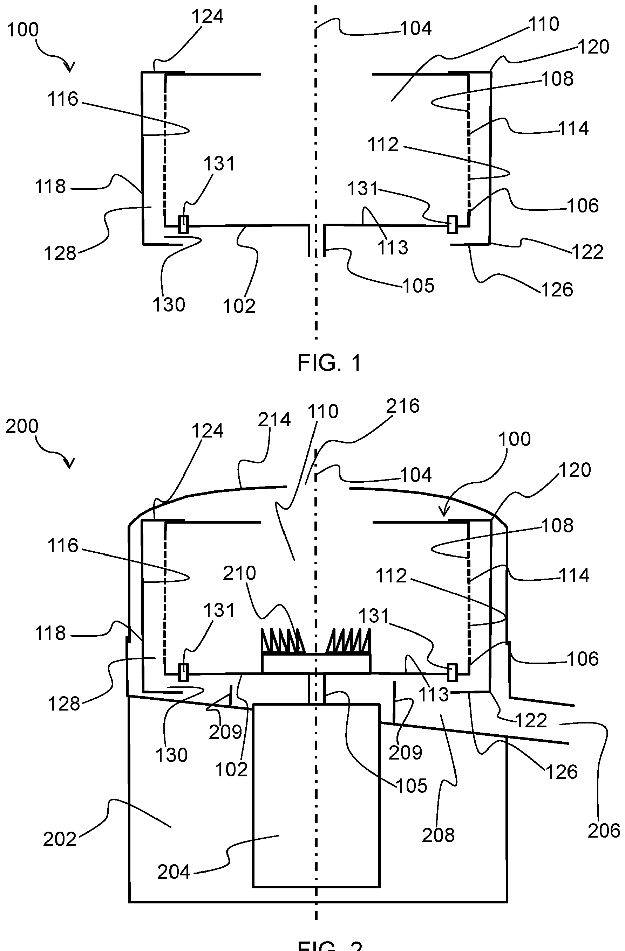

FIG. 1 schematically depicts a juicer container 100 according to an example. The juicer container 100 may be regarded as a non-limiting example of a kitchen food processing container for use in a kitchen food processing apparatus comprising centrifugal separating functionality. Thus, while the following detailed description is with reference to such a juicer container (and juicer including the juicer container), the same principles can be applied to any kitchen food processing container/apparatus with a centrifugal separator function.

The juicer container 100 comprises a base 102 couplable to a motor (not visible in FIG. 1) to enable spinning of the juicer container 100 about a rotation axis 104.

The rotation axis 104 may extend vertically, as shown in FIG. 1, when the base 102 is coupled to the motor and orientated for use.

The juicer container 100 may be regarded as a "juicer drum" for a centrifugal juicer.

The base 102 may be coupled to the motor in any suitable manner. The juicer container 100 may include a motor coupling 105 arranged to couple, for example detachably couple, the base 102 to the motor.

The juicer container 100 comprises a pulp retention wall 106 supported on the base 102. The pulp retention wall 106 has an inner surface 108 facing a chamber 110, and an outer surface 112 facing away from the chamber 110.

In at least some embodiments, such as that shown in FIG. 1, an interior surface 113 of the base 102 may also face the chamber 110. Food received in the chamber 110 may be supported on the interior surface 113 of the base 102 when the base is coupled to the motor and orientated for use. The chamber 110 may be delimited by the interior surface 113 of the base 102 and the inner surface 108 of the pulp retention wall 106. In such embodiments, the inner surface 108 adjoins and extends away from the interior surface 113 of the base 102.

The pulp retention wall 106 may be regarded as an "annular pulp retention wall". This is in view of the pulp retention wall's extension around, so as to delimit a circumference of, the chamber 110, so that pulp is retained therein during spinning of the juicer container 100.

The circumference of the chamber 110 defined by the inner surface 108 of the pulp retention wall 106 may be centered by the rotation axis 104. This may assist in balancing the juicer container 100 during spinning of the juicer container 100.

The pulp retention wall 106 may be circular, or substantially circular, in plan.

The pulp retention wall 106 comprises a filter 114 configured to retain the pulp in the chamber 110 whilst allowing the juice to pass out of the chamber 110.

The filter 114 may have any suitable design. In some embodiments, the filter 114 comprises a sieve; an edge type filter; and/or a plurality of holes of at most 2 mm in any one direction. Such a filter 114 may assist to retain the pulp in the chamber 110, whilst facilitating outflow of the juice during the spinning of the juicer container 100.

In some embodiments, the filter 114 comprises, or is, a perforated wall displaced from the circumferential plane and extends in a direction having components in a radial direction, as disclosed, for example, in WO2020002119A1.

In some embodiments, the filter 114 is detachable from the remainder of the pulp retention wall 106. This may facilitate cleaning of the filter 114 and/or switching of the filter 114 for another filter 114, for example with a different hole size so as to attain juice having a different clarity/pulp content.

The filter 114 may be provided around at least a portion of, for example may be provided in a plurality of portions distributed around, a circumference of the pulp retention wall 106.

Preferably, the filter is provided, for example extends around, the entirety of the circumference of the pulp retention wall 106. This may facilitate balancing of the juicer container 100 during the spinning of the juicer container 100.

In alternative embodiments in which the filter 114 is provided around only a portion, or fraction, of the circumference of the pulp retention wall 106, the circumferential movement of the juice explained in more detail herein below may assist to compensate for more pulp being present at the portion of the circumference of the pulp retention wall 106 at which the filter 114 is provided.

More generally, the juicer container 100 further comprises a juice retention surface 116 included in a juice retention wall 118. A circumference of the juice retention surface 116 surrounds and faces the outer surface 112 of the pulp retention wall 106. The circumference of the juice retention surface 116 may be centered by the rotation axis 104, as shown in FIG. 1.

The juice retention surface 116 may be regarded as an "annular juice retention surface". This is in view of the juice retention surface's 116 extension around the outer surface of the pulp retention wall 106 so as to receive and retain the juice thereon during spinning of the juicer container 100.

The circumference of the juice retention surface 116 may extend in a circular, or substantially circular, manner when viewed in plan around the pulp retention wall 106.

The juice retention surface 116 is arranged to receive and retain the juice thereon during the spinning of the juicer container 100. In other words, the juice, having passed through the filter 114, contacts the juice retention surface 116 and is retained thereon throughout spinning of the juicer container 100. Such retention of the juice is achievable by the juice retention surface 116 being provided in an annular recess of the juice retention wall 118.

This contrasts to prior art juicer containers in which the spinning surface surrounding and facing the outer surface of a pulp retention wall is configured to cause juice received thereon to, rather than being retained thereon, rise or descend on the surface and exit via an outlet during spinning of the juicer container.

Such juice retention on the juice retention surface 116 can be implemented in any suitable manner. In some embodiments, such as that shown in FIG. 1, the juice retention surface 116 extends parallel with the rotation axis 104. This may assist to retain the juice on the juice retention surface 116 during the spinning of the juicer container 100.

In some embodiments, such as that shown in FIG. 1, the juice retention surface 116 is defined by a right cylindrical surface axially extending parallel with the rotation axis 104. Such a right cylindrical surface defining the juice retention surface 116 may assist retention of the juice on the juice retention surface during the spinning of the juicer container 100.

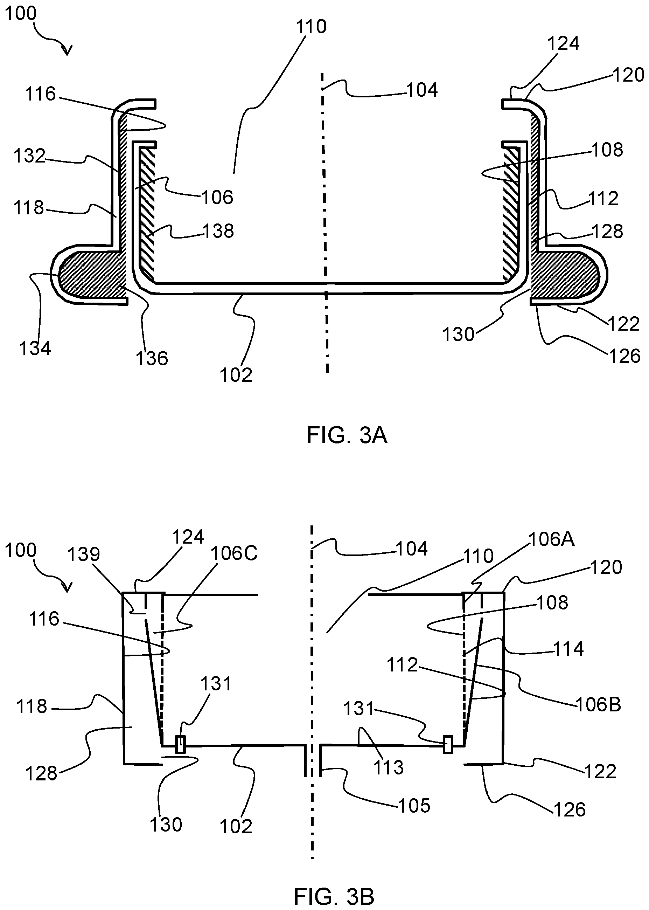

The juice retention surface 116 can be arranged in other ways in order to facilitate retention of the juice thereon. The juice retention surface 116 can have any suitable shape, allowing for the circumference of the juice retention surface 116 being centered with the rotation axis 104 extending through the chamber 110. A further example in which only a portion of the juice retention surface 116 extends parallel with the rotation axis 104 will be described herein below with reference to FIG. 3A.

Returning to FIG. 1, the juice retention wall 118 may have a top portion 120 distal from the base 102 and a bottom portion 122 proximal to the base 102, with the juice retention surface 116 defining a surface of the juice retention wall 118 extending between the top portion 120 and the bottom portion 122.

The juice retention wall 118 may be regarded as an "annular juice retention wall". This is in view of the juice retention wall's 118 extension around the outer surface of the pulp retention wall 106 so that the juice retention surface 116 receives and retains the juice thereon during spinning of the juicer container 100.

The annular pulp retention wall 106 together with the annular juice retention wall 118 may, in some embodiments, define the walls of a double-walled juicer container 100, in other words a double-walled juicer drum. It should nonetheless be generally noted that the juice retention wall 118 can be regarded as being juice-impermeable such that juice is retained on the juice retention surface 116, and does not pass therethrough, during spinning of the container 100. That the pulp retention wall 106 is juice-permeable follows from the pulp retention wall 106 comprising the filter 114.

The pulp retention wall 106 and the juice retention wall 118 can be formed of any suitable material. In some embodiments, the pulp retention wall 106 and/or the juice retention wall 118 comprise or comprises, for example is or are formed from, an engineering thermoplastic and/or a metal or metal alloy, for example stainless steel. This can assist in making the juicer container 100 sufficiently durable.

More generally, spinning of the juicer container 100 may mean that the pulp retention wall 106 and the juice retention wall 118 spin together about the rotation axis 104.

This spinning may cause juice and pulp to be flung at the inner surface 108 of the pulp retention wall 106, causing filtering of the juice which passes through the filter 114, with the juice being retained on the juice retention surface 116 during the spinning.

Upon sufficient slowing of the rotation of the juicer container 100 following the spinning, for example to or beyond a threshold rotational speed in the range of 5 to 20 revolutions per minute, the juice may, in at least some embodiments, flow away from the juice retention surface 116 by gravity.

It is noted that, in some embodiments (not visible), the pulp retention wall and the juice retention wall are coupled (or couplable) to the motor independently of each other.

In some embodiments, such as that shown in FIG. 1, the top portion 120 comprises an upper juice retention element 124 arranged to protrude radially towards the center of the juicer container 100. The upper juice retention element 124 may assist to minimize or prevent escape of juice via the top portion 120 of the juice retention wall 118.

The upper juice retention element 124 may extend to reach the pulp retention wall 106, as shown in FIG. 1. Thus, the upper juice retention element 124 may prevent escape of juice between the top portion 120 of the juice retention wall 118 and the pulp retention wall 106.

The bottom portion 122 may comprise a lower juice retention element 126 arranged to protrude radially towards the center of the juicer container 100. The lower juice retention element 126 may assist to minimize or prevent escape of juice via the bottom portion 122 of the juice retention wall 118 during the spinning of the juicer container 100.

The annular recess in which the juice retention surface 116 is provided may thus be defined between the upper juice retention element 124 and the lower juicer retention element 126.

In order to extract juice from a blend of juice and pulp, a minimum acceleration on the blend is required. This acceleration is provided by spinning the juicer container 100, creating a centrifugal force at the pulp retention wall 106. The acceleration is given by:

$$a = r\omega^2$$

where r is the radius of the juicer container 100 and ω is the angular velocity of the juicer container 100. Thus, the radius and angular velocity of the juicer container 100 may influence the stability of the juicer container 100 when spinning.

Rotating parts have an inherent impulse, also known as precession. Simplified, the moment is a function of angular velocity and the moment of inertia of the juicer container 100:

$$M_k = \omega_P L \sin \alpha$$

$$L = J_x \omega = \frac{mr^2}{2}\omega$$

where L is the angular momentum of the spinning juicer container 100, $J_x$ is the moment of inertia of the juicer container 100 around the rotation axis 104, m is the mass of the juicer container 100 (and any pulp and/or juice inside), $\omega_P$ is the angular velocity of precession and α is the angle of precession around the rotation axis 104. The stabilizing moment $M_k$ helps the juicer container 100 stay stable when a destabilizing impulse is applied to the juicer container 100, for example from an asymmetric distribution of pulp.

The juice retention surface 116 is configured to enable movement of the juice retained thereon around the circumference of the juice retention surface 116. Thus, the juice can move to compensate for any imbalance of the spinning juicer container 100 caused by uneven pulp distribution around a circumference of the pulp retention wall 106. Accordingly, imbalance caused by unevenly distributed pulp around the pulp retention wall 106 of the juicer container 100 can be alleviated in a relatively simple and inexpensive way, which may, for example, obviate the requirement to add relatively complex mechanical means, for example suspension systems, counter masses and/or damping systems, or electronic means, for example g-force measurement and/or auto-stop and restart, to compensate for such imbalance.

In at least some embodiments, the juice retention surface 116 is smooth and/or no barriers protrude therefrom to inhibit the movement of the juice around the circumference of the juice retention surface 116.

In some embodiments, the juice retention surface 116 is separated from the outer surface 112 of the pulp retention wall 106 by at least 1 mm. By ensuring that the gap 128 between the juice retention surface 116 and the outer surface 112 is at least 1 mm, movement of the juice around the circumference of the juice retention surface 116 may be facilitated.

In some embodiments, the juice retention surface 116 is separated from the outer surface 112 of the pulp retention wall by 5 to 10 mm.

Such a gap 128 may assist to provide sufficient capacity of the juice retention surface 116, for example for at least one portion of juice, for instance 100 mL.

An opening 130 may be provided for allowing the juice to flow out of the juicer container 100, for example by gravity, when the rotation of the juicer container 100 has been sufficiently slowed down following the spinning, for example to less than or equal to a threshold rotational speed in the range of 5 to 20 revolutions per minute.

In some embodiments, such as that shown in FIG. 1, the opening 130 is between the lower juice retention element 126 and the pulp retention wall 106. This opening 130 may provide a convenient outlet through which the juice can flow by gravity when the rotation of the juicer container 100 has been sufficiently slowed down following the spinning.

In some embodiments, the juice retention wall 118 is detachably coupled to the pulp retention wall 106 and/or to the base 102. Detachment of the juice retention wall 118 may facilitate cleaning of the juicer container 100.

In some embodiments, the juicer container 100 comprises a valve arrangement 131 controllable to release a food blend comprising juice and pulp from the chamber 110. The valve arrangement 131 may, for example, enable the juicer container 100 to be utilized in a smoothie-making mode, in which at least some of the juice remains in the chamber 110 together with the pulp. In such a smoothie-making mode, the juicer container 100 may not be spun or may be spun at a speed and/or for a time limited such that at least some of the juice remains in the chamber 110 together with the pulp.

FIG. 2 schematically depicts a juicer 200 comprising the juicer container 100 shown in FIG. 1. The juicer 200 comprises a juicer base 202, which juicer base 202 includes a motor 204 for coupling to the base 102 of the juicer container 100 so as to enable spinning of the juicer container 100 about the rotation axis 104.

In embodiments, such as those shown in FIGs. 1 and 2, in which the juicer container 100 includes the motor coupling 105, the motor coupling 105 may transfer torque from the motor 204 to the base 102 in order to spin the juicer container 100.

In some embodiments, the motor 204 comprises, or is, a DC motor.

The motor 204 may, for instance, comprise a rotor, a stator, a shaft and a motor casing containing the elements of the motor 204.

In some embodiments, the motor 204 is configured to spin the juicer container 100 at a rotational speed of at least 800 revolutions per minute. This may assist retention of the juice on the juice retention surface 116.

The motor 204 may, for example, spin the juicer container 100 at a rotational speed in the range of 800 revolutions per minute to 4000 revolutions per minute.

In a non-limiting example, the motor 204 spins the juicer container 100 at about 1200 revolutions per minute.

In some embodiments, the juice retention surface 116 is configured to release a volume of juice retained thereon when the rotational speed of the container has slowed, following said spinning, to or beyond a threshold rotational speed, for example to less than or equal to a threshold rotational speed in the range of 5 to 20 revolutions per minute.

At or below the threshold, e.g. predetermined, rotational speed, the volume of juice may be released, for example by gravity, from the juice retention surface 116.

In some embodiments, the juicer 200 comprises a controller (not visible) configured to control the motor 204 to spin the container 100 so as to cause juice received on the juice retention surface to be retained thereon, for example at a rotational speed of at least 800 revolutions per minute, and to subsequently control the motor 204 to slow the rotational speed of the container 100 to or beyond a threshold rotational speed to cause release of the juice from the juice retention surface 116.

At such a threshold, e.g. predetermined, rotational speed, the volume of juice may be released by gravity from the juice retention surface 116, as previously described.

The base 102 of the juicer container 100 may be positioned atop the juicer base 202 when the juicer 200 is orientated for use. Such an in-use orientation of the juicer 200, in which the rotation axis 104 extends vertically, is shown in FIG. 2.

The juicer 200 further comprises an outlet 206 for juice to exit to the exterior of the juicer 200, with a fluid path 208 being defined from between the outer surface 112 of the pulp retention wall 106 and the juice retention surface 116 to the outlet 206.

In some embodiments, such as that shown in FIG. 2, the juicer base 202 comprises a baffle arrangement 209 arranged around the motor coupling 105 between the motor 204 and the juicer container 100 for guiding the flow of juice along the fluid path in a way which bypasses the motor coupling 105. This may assist to avoid ingress of the juice into the juicer base 202 towards the motor 204, and thus mitigate the risk of damage to the motor 204.

In some embodiments, such as that shown in FIG. 2, the juicer 200, or the container 100 per se, includes a food shredding element 210 disposed/disposable within the juicer container 100, with the food shredding element 210 being configured for blending food into a food blend.

In the non-limiting example shown in FIG. 2, the food shredding element 210 is in the form of a shredding portion, for instance a shredding plate, fixedly mounted in the container 100, e.g. fixedly mounted on the base 102. Thus, the shredding portion may rotate together with the container 100 as a whole.

The above-described spinning of the juicer container 100 may enable the food blend to be separated into juice and pulp, with the latter being retained within the chamber 110 of the juicer container 100.

The juicer 200 may comprise a lid 214. The lid 214 may assist to retain the pulp and juice within the juicer 200, and in particular within the juicer container 100.

The lid 214 may delimit a lid aperture 216 through which food is deliverable into the chamber 110.

In some embodiments, the lid 214 is detachable from the remainder of the juicer 200. Detachment of the lid 214 may, for instance, facilitate detachment of the juicer container 100 from the juicer base 202 and/or decoupling of the base 102 of the juicer container 100 from the motor 204.

In some embodiments, the juicer comprises a blender unit configured to blend food into a food blend and output the food blend to the juicer container. Whilst not shown in FIG. 2, the juicer container may, in such embodiments, be arranged beneath the blender unit when the juicer is orientated for use. In this manner, transfer of the food blend from the blender unit into the juicer container may be assisted by gravity.

FIG. 3A schematically depicts a juicer container 100 according to another example. In this case, the juice retention surface 116 comprises an inboard portion 132 and an outboard recessed/extended portion 134 set further back, in other words offset so as to be further, from the rotation axis 104 than the inboard portion 132 such as to collect at least some of the juice 136 therein during the spinning of the juicer container 100. The pulp 138 is retained by the pulp retention wall 106 within the chamber 110, as previously described.

Such an outboard recessed portion 134 may assist to retain the juice 136 on the juice retention surface 116 during the spinning of the juicer container 100.

The outboard recessed portion 134 may, for instance, take the form of an annular channel extending around the circumference of the juice retention surface 116. Thus, the outboard recessed portion 134 may assist to increase the juice-retaining capacity of the juice retention surface 116.

In some embodiments, such as that shown in FIG. 3A, the outboard recessed portion 134 may be arranged proximal to the bottom portion 122, and hence distal from the top portion 120, of the juice retention wall 118. This may assist in lowering the center of gravity of the juicer container 100 during the spinning, and thus improve stability. This effect can be rationalized in the following way.

Instability in the spinning juicer container 100 can be due to an asymmetrically distributed mass throughout the pulp retention wall 106 moving the position of the center of gravity away from the rotation axis 104. The distance of the center of gravity from the rotation axis 104 depends on the height of the center of gravity and the angle from the rotation axis 104. The generated moment from the asymmetrically distributed mass is a function of the mass of the pulp 138, the radius, the angular velocity and the height of the working point. The moment from the mass of the juicer container 100 is given by:

$$M_F = F h_s \sin \alpha$$

$$F = mg$$

Where F is the gravitational force on the center of gravity of the spinning juicer container, $h_s$ is the height of the working point and m is the mass of the juicer container 100 and pulp 138. The working point $h_s$ is the height of the center of gravity of the spinning juicer container 100.

In order for the juicer container 100 to be stable, the stabilizing moment $M_k$ counteracts the destabilizing moment $M_F$:

$$M_k = M_F$$

$$\omega_P L \sin \alpha = F h_s \sin \alpha$$

$$\omega_P = \frac{mgh_s}{J_x \omega}$$

Thus, the smaller $h_s$ is, the smaller the angular velocity of precession is, thus reducing the vibrations of the spinning juicer container 100.

When, as shown in FIG. 3A, the recessed outboard portion 134 is arranged proximal to the bottom portion 122, the lower juice retention element 126 may define a lower periphery of the recessed outboard portion 134. Thus, the lower juice retention element 126 may assist to retain the juice 136 in the recessed outboard portion 134 during the spinning of the juicer container 100.

In some embodiments, a volume of juice 136 retainable on the juice retention surface 116 during the spinning is at least 100 mL, for example at least 200 mL. Such a volume of juice 136 may, for example, correspond to at least one serving of juice 136.

More generally, the juice retention surface 116 may be arranged to retain a volume of juice 136 whose weight is at least equal to, and preferably greater than, the weight of the pulp 138 retainable in the filter of the pulp retention wall 106.

In some embodiments, such as that shown in FIG. 3B, the pulp retention wall comprises an inner pulp retention wall portion 106A comprising the inner surface 108, and an outer pulp retention wall portion 106B comprising the outer surface 112, with a cavity 106C provided between the first and second pulp retention wall portions 106A, 106B.

In such embodiments, the filter 114 may be included in the inner pulp retention wall portion 106A and arranged to permit juice to pass into the cavity 106C, with the outer pulp retention wall portion 106B being arranged, for example by having a sloped surface, such that the juice received in the cavity 106C is guided, for example upwards (as in the example shown in FIG. 3B) or downwards, to a pulp retention wall outlet 139 through which the juice can flow to reach the juice retention surface 116.

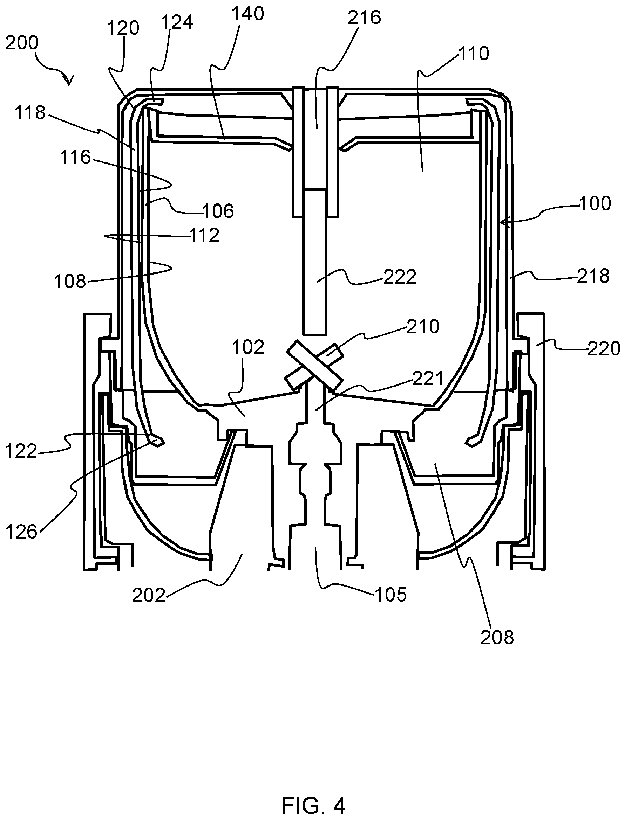

FIG. 4 shows some of the architecture of a juicer 200 according to another example. The base 102 of the juicer container 100 is supported on the juicer base 202, with the motor (not visible in FIG. 4) being coupled to the base 102 of the juicer container 100 so as to enable spinning of the juicer container 100 about the rotation axis, as previously described.

The juicer 200 shown in FIG. 4 may, for example, comprise the juicer container 100 design shown in FIG. 3B, but noting that the pulp retention wall portions 106A, 106B are not clearly visible in FIG. 4.

The juicer container 100 shown in FIG. 4 includes the motor coupling 105 arranged to couple, for example detachably couple, the base 102 and the motor.

In some embodiments, such as that shown in FIG. 4, the juicer 200 comprises a housing 218 in which the juicer container 100 is mounted. The housing 218 may provide protection for the user because of the barrier it provides between the user and the spinning juicer container 100.

The housing 218 may be formed of any suitable material. In some embodiments, the housing 218 comprises, or is formed of, an engineering thermoplastic and/or a metal or metal alloy, for example stainless steel. Such materials may assist the housing 218 to protect the user from the spinning juicer container 100.

The housing 218 may, for example, be coupled, for example detachably coupled, to a base housing portion 220. The housing 218 may be coupled to the juicer base 202 via the base housing portion 220.

In some embodiments, the food shredding element 210, for example blender knife, is rotatable by the motor. As shown in FIG. 4, the food shredding element 210 is coupled to the motor via a spindle 221.

In some embodiments, the food shredding element 210 is rotatable by the motor independently of the spinning of the juicer container 100. This can be implemented in any suitable manner, such as by the juicer 200 comprising a clutch (not visible) configured to selectively couple the juicer container 100 to the motor.

In some embodiments, the motor is configured to rotate the food shredding element 210 independently of the spinning of the juicer container 100 and in the range of 8000 revolutions per minute to 20000 revolutions per minute.

The juicer container 100 may include a cover 140 arranged to oppose the base 102 across the chamber 110. The cover 140 may assist to retain food within the chamber 110 during shredding and/or separating the juice from the pulp.

The food blend may be formed by feeding food 222, for example a piece of fruit or vegetable, into the chamber 110 while the food shredding element 210 is rotating. The food 222 may be fed into the chamber 110 via the lid aperture 216.

During the shredding, the juice liberated from the food 222 via the shredding may be flung against the pulp retention wall 106, with the pulp retention wall 106 retaining the pulp and juice inside the chamber 110. In this first step, the motor 204 may rotate the shredding element 210 at relatively high speed, for example 10000 revolutions per minute.

The juice can be filtered away from the pulp and retained on the juice retention surface 116 during the spinning of the container 100 in a subsequent step. The movement of the juice on the juice retention surface 116 during this subsequent step assists balancing the spinning juicer container 100, as previously described.

In this subsequent step, the container 100 may be spun, for instance via the motor being coupled to suitable gearing, at a lower rotational speed, for example at about 1000 or about 1200 revolutions per minute.

It is noted that the architecture shown in FIG. 4 can be used in various ways. In a first option available to the user, only the above-described first step involving rotating the shredding element 210, for instance blender knife, is implemented to provide a food blend or smoothie. The latter can then be poured out of the container 100 without implementing the above-described subsequent spinning step.

The rotating of the shredding element in this first option may be at 8000 revolutions per minute to 20000 revolutions per minute, for example at about 10000 revolutions per minute.

A second option is as described above: after blending, shifting gear to engage the container 100/blender jar in order to spin the container 100.

In this spinning step, the container 100 may be spun at 800 revolutions per minute to 4000 revolutions per minute, for example at about 1000 revolutions per minute.

When the container 100 design depicted in FIG. 3B is employed, the filtered juice may creep up the outer pulp retention wall portion 106B to the pulp retention wall outlet 139, and escape from the pulp retention wall outlet 139 and be received on the juice retention surface 116.

Upon sufficient slowing rotation of the juicer container 100 following the spinning, the juice may flow away, for example due to gravity, from the juice retention surface 116.

In the embodiment shown in FIG. 4, the filtered juice can flow into the fluid path 208 defined from between the outer surface 112 of the pulp retention wall 106 and the juice retention surface 116 to the outlet (not visible in FIG. 4) of the juicer 200.

In some embodiments, the juicer 200 comprises a liquid reservoir (not visible) for containing a potable liquid, for example water, and a dosing arrangement configured to dose the potable liquid from the liquid reservoir into the juicer container 100.

In some embodiments, the dosing arrangement is configured to dose the potable liquid from the liquid reservoir into the chamber 110 and/or onto the juice retention surface 116.

In embodiments in which the potable liquid is dosed into the chamber 110, the potable liquid may be separated from the pulp during the spinning of the juicer container 100, and hence be included in the filtered juice retained on the juice retention surface 116 during the spinning.

The capability to dose additional potable liquid to the juicer container 100 in this manner may assist the imbalance compensation provided by the juice retention surface 116.

The dosing arrangement may, for example, include a valve configured to open at or above a certain rotational speed in order to cause the potable liquid from the liquid reservoir to be dosed into the juicer container 100, for example into the chamber 110 and/or onto the juice retention surface 116.

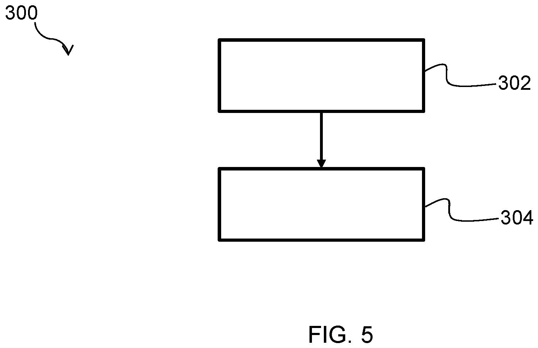

FIG. 5 provides a flowchart of a method 300 of separating juice from pulp. The method 300 uses a juicer container having a base; a pulp retention wall arranged on the base, the pulp retention wall including an inner surface facing a chamber, and an outer surface facing away from the chamber, and a filter; and a juice retention surface whose circumference surrounds and faces the outer surface. The juicer container may, for example, be the juicer container 100 according to any of the embodiments described herein.

The method 300 comprises spinning 302 the juicer container on the base to cause the juice to pass out of the chamber via the filter whilst retaining the pulp in the chamber, with the juice being received and retained on the juice retention surface during the spinning, and the juice retention surface enabling movement of the juice retained thereon around the circumference. The latter may assist to alleviate imbalance caused by unevenly distributed pulp around the pulp retention wall of the juicer container, as previously described.

The method 300 may further comprise slowing 304 rotation of the juicer container following the spinning of the juicer container to cause the juice to flow away, for example due to gravity, from the juice retention surface.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A kitchen food processing container (100) for separating juice from pulp, the container comprising:

   a base (102) couplable to a motor to enable spinning of the container about a rotation axis (104); a pulp retention wall (106) arranged on the base, the pulp retention wall having an inner surface (108) facing a chamber (110), and an outer surface (112) facing away from the chamber, the pulp retention wall comprising a filter (114) configured to retain the pulp in the chamber whilst allowing the juice to pass out of the chamber; and

   a juice retention wall (118) having a juice retention surface (116) whose circumference surrounds and faces the outer surface, wherein the juice retention surface is provided in an annular recess of the juice retention wall such that the juice received on the juice retention surface is retained thereon during said spinning, and wherein the juice retention surface is configured to enable movement of said juice retained thereon around said circumference.

2. The kitchen food processing container (100) according to claim 1, wherein at least part of the juice retention surface (116) extends parallel with the rotation axis (104).

3. The kitchen food processing container (100) according to claim 1 or claim 2, wherein the juice retention surface (116) comprises an inboard portion (132) and an outboard recessed portion (134) set further back from the rotation axis than the inboard portion such as to collect at least some of the juice in the outboard recessed portion during said spinning.

4. The kitchen food processing container (100) according to any of claims 1 to 3, wherein the juice retention surface (116) is separated from the outer surface (112) by at least 1 mm.

5. The kitchen food processing container (100) according to any of claims 1 to 4, wherein the juice retention wall (118) has a top portion (120) distal from the base (102) and a bottom portion (122) proximal to the base, the juice retention surface (116) defining a surface of the juice retention wall extending between the top portion and the bottom portion.

6. The kitchen food processing container (100) according to claim 5, wherein the top portion (120) comprises an upper juice retention element (124) arranged to protrude radially towards the center of the container.

7. The kitchen food processing container (100) according to claim 6, wherein the upper juice retention element (124) extends to reach the pulp retention wall (106).

8. The kitchen food processing container (100) according to any of claims 5 to 7, wherein the bottom portion (122) comprises a lower juice retention element (126) arranged to protrude radially towards the center of the container.

9. The kitchen food processing container (100) according to claim 8, wherein an opening (130) is defined between the lower juice retention element (126) and the pulp retention wall (106).

10. The kitchen food processing container (100) according to any of claims 5 to 9 as according to claim 3, wherein the outboard recessed portion (134) is arranged proximal to the bottom portion (122).

11. The kitchen food processing container (100) according to any of claims 1 to 10, wherein the filter (114) is provided around at least a portion, and preferably the entirety, of a circumference of the pulp retention wall (106).

12. The kitchen food processing container (100) according to any of claims 1 to 11, wherein the juice retention surface (116) is configured to release a volume of juice retained thereon when the rotational speed of the container has slowed, following said spinning, to or beyond a threshold rotational speed.

13. A kitchen food processing apparatus (200) comprising:

   the kitchen food processing container (100) according to any of claims 1 to 12; an apparatus base (202), the base (102) of the container being supported on the apparatus base, wherein the apparatus base comprises a motor (204) for coupling to the base of the container so as to enable spinning of the container about a rotation axis (104); and

   an outlet (206) for juice to exit to the exterior of the apparatus, wherein a fluid path (208) is defined from between the outer surface (112) and the juice retention surface (116) to the outlet.

**14.** The kitchen food processing apparatus (200) according to claim 13, wherein the motor (204) is configured to spin the container (100) at a rotational speed of at least 800 revolutions per minute; optionally wherein the motor is configured to spin the container at a rotational speed in the range of 800 revolutions per minute to 4000 revolutions per minute.

**15.** The kitchen food processing apparatus (200) according to claim 13 or claim 14, comprising a food shredding element (210) configured for blending food into a food blend; optionally wherein the food shredding element is rotatable by the motor (204) independently of the spinning of the container (100).

FIG. 1

FIG. 2

100

110

104

116

124

120

132

106

108

118

112

138

128

134

136

130

122

102

126

**FIG. 3A**

100

139

124

106C

104

110

106A

116

120

118

108

112

114

131

106B

128

131

122

130

113

102

126

105

**FIG. 3B**

FIG. 4

300

302

304

FIG. 5

Europäisches
Patentamt
European
Patent Office
Office européen
des brevets

# EUROPEAN SEARCH REPORT

Application Number

EP 22 15 7045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 074 202 A (SANJUAN ANTONIO B [ES]) 24 December 1991 (1991-12-24) * column 1, line 53 - column 2, line 43; claims; figures * ----- | 1-15 | INV. A47J19/02 |
| X | US 4 614 153 A (KUROME SHOSAKU [JP] ET AL) 30 September 1986 (1986-09-30) | 1-11, 13-15 | |
| A | * column 4, line 25 - column 21, line 15; claims; figures * ----- | 12 | |
| E | EP 4 023 115 A1 (KONINKLIJKE PHILIPS NV [NL]) 6 July 2022 (2022-07-06) * paragraphs [0036] - [0086]; claims; figures * ----- | 1,2,4-9, 11,13-15 | |

TECHNICAL FIELDS
SEARCHED      (IPC)

A47J

The present search report has been drawn up for all claims

| Place of search | Date of completion of the search | Examiner |
|---|---|---|
| Munich | 4 August 2022 | Moulié, Andreas |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
.......................................................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 22 15 7045

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2022

| Patent document cited in search report | | Publication date | Patent family member(s) | | | Publication date |
|---|---|---|---|---|---|---|
| US 5074202 | A | 24-12-1991 | AT | 113183 | T | 15-11-1994 |
| | | | AU | 644598 | B2 | 16-12-1993 |
| | | | BR | 9003789 | A | 03-09-1991 |
| | | | CA | 2022643 | A1 | 05-02-1991 |
| | | | DE | 69013608 | T2 | 06-04-1995 |
| | | | EG | 19035 | A | 30-04-1994 |
| | | | EP | 0411603 | A2 | 06-02-1991 |
| | | | ES | 2063209 | T3 | 01-01-1995 |
| | | | FR | 2650496 | A1 | 08-02-1991 |
| | | | KR | 910004147 | A | 28-03-1991 |
| | | | PT | 94883 | A | 31-03-1992 |
| | | | US | 5074202 | A | 24-12-1991 |
| US 4614153 | A | 30-09-1986 | CA | 1227405 | A | 29-09-1987 |
| | | | US | 4614153 | A | 30-09-1986 |
| EP 4023115 | A1 | 06-07-2022 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020002119 A1